**Europäisches Patentamt**

**European Patent Office**

**Office européen des brevets**

(11) Veröffentlichungsnummer: **0 098 370**
**A2**

(12) **EUROPÄISCHE PATENTANMELDUNG**

(21) Anmeldenummer: **83104833.5**

(22) Anmeldetag: **17.05.83**

(51) Int. Cl.³: **G 01 B 5/00**

(30) Priorität: **06.07.82 DE 3225185**

(43) Veröffentlichungstag der Anmeldung: **18.01.84**
Patentblatt 84/3

(84) Benannte Vertragsstaaten: **AT CH FR GB IT LI NL SE**

(71) Anmelder: **Dr. Johannes Heidenhain GmbH,
Nansenstrasse 17, D-8225 Traunreut (DE)**

(72) Erfinder: **Dangschat, Holmer, Dipl.-Ing.,
Heinz-von-Stein-Strasse 25, D-8225 Traunreut (DE)**

(54) **Einrichtung zum Messen oder Einstellen einer Bezugslage.**

(57) Bei einer derartigen Einrichtung ist ein höhenverstellbarer Schlitten (5) zur Gewichtskompensation über eine Stange (6) mit einem Auftriebskörper (7) gekoppelt, der völlig in eine Flüssigkeit (8) eintaucht.

**EP 0 098 370 A2**

- 1 -

DR. JOHANNES HEIDENHAIN GMBH          2. Juli 1982


Einrichtung zum Messen oder Einstellen einer
Bezugslage
===================================================

Die Erfindung betrifft eine Einrichtung zum Messen
oder Einstellen einer Bezugslage gemäß dem Oberbegriff des Anspruchs 1.

Bei Einrichtungen, bei denen ein Maschinenteil
mittels eines Antriebs höhenverstellbar ist, ist es
bekannt, zur Gewichtskompensation das Maschinenteil
mit einem Gegengewicht mit der gleichen Masse wie
das Maschinenteil mechanisch zu koppeln, um den Antrieb vom Gewicht des Maschinenteils zu entlasten.
Diese Kopplung kann durch umgelenkte Zugmittel
(über eine Rolle geführtes Seil oder Band) oder
durch ein Hebelwerk erfolgen, so daß das Maschinenteil und das Gegengewicht gleich große gegenläufige
Bewegungen ausführen.

Diese Kopplung hat aber den Nachteil, daß sich die
Schwerpunkte des Maschinenteils und des Gegengewichts
nicht fluchtend übereinander befinden, sondern seit-

- 2 -

lich versetzt sind, so daß bei auftretenden Beschleunigungen zwar ein Massenausgleich, aber kein Momentenausgleich erfolgt. Um die beiden Schwerpunkte fluchtend übereinander zu bringen, ist eine aufwendigere Anordnung (mehrere Umlenkrollen oder Hebelwerke) erforderlich. Alle Koppelelemente sind reibungsbehaftet, wodurch der Massenausgleich und präzise Bewegungen des Maschinenteils beeinträchtigt werden. Durch die Elastizität der Koppelelemente ist diese Anordnung auch schwingungsempfindlich.

Der Erfindung liegt die Aufgabe zugrunde, bei einer Meßeinrichtung mit einem höhenverstellbaren Schlitten eine Gewichtskompensation für den Schlitten anzugeben, die neben einem Massenausgleich auch einen Momentenausgleich bewirkt sowie die Meßbewegungen des Schlittens nicht beeinträchtigt.

Diese Aufgabe wird durch die kennzeichnenden Merkmale des Anspruches 1 gelöst.

Die mit der Erfindung erzielten Vorteile bestehen insbesondere darin, daß die Schwerpunkte des Schlittens und der Ausgleichsmasse fluchtend übereinander liegen, so daß neben einem Massenausgleich ein Momentenausgleich bewirkt wird. Die Ankopplung ist haftreibungsfrei, so daß beliebig feine Höhenverstellungen des Schlittens möglich sind, wie es bei Präzisionsmessungen erforderlich ist; die Anordnung wirkt zusätzlich als Dämpfung. Die vorhandene Flüssigkeitsmasse kann geringer sein als die Schlittenmasse, so daß sich eine geringe Gesamtmasse ergibt. Die Verbindung zwischen dem Schlitten und dem Auftriebskörper kann bei ge-

- 3 -

ringem Gewicht sehr steif ausgeführt werden, was zu einem günstigen Verhalten bei Schwingungen und Erschütterungen führt.

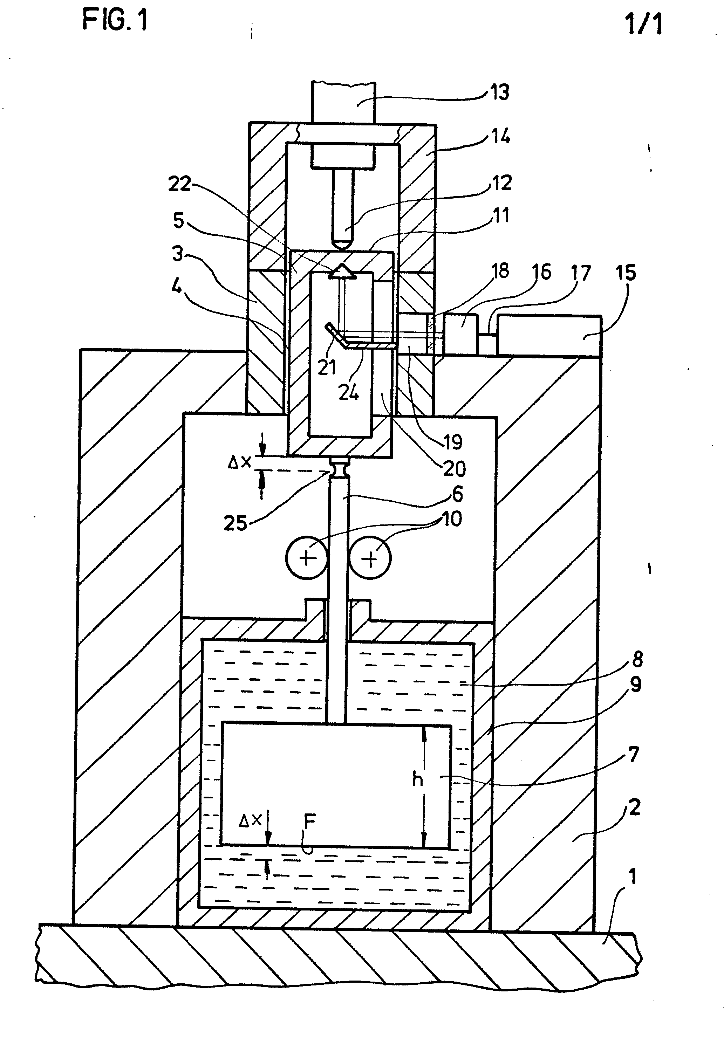

Ein Ausführungsbeispiel ist in der Zeichnung dargestellt und wird im folgenden näher erläutert.

Auf einer Grundplatte 1 ist ein senkrechter Tragrahmen 2 befestigt, an dem eine Lagerschale 3 für ein Luftlager 4 zur senkrechten Führung eines höhenverstellbaren Meßschlittens 5 angebracht ist. Der Meßschlitten 5 ist mittels einer Stange 6 mit einem Auftriebskörper 7 in Meßrichtung starr verbunden, der völlig in eine Flüssigkeit 8 in einem Behälter 9 eintaucht, der zwischen dem Tragrahmen 2 auf der Grundplatte 1 angeordnet ist. Das Volumen des Auftriebskörpers 7 ist so dimensioniert, daß der Auftrieb gleich dem Gesamtgewicht des Meßschlittens 5, der Stange 6 und des Auftriebskörpers 7 ist, so daß sich ein Gleichgewichtszustand einstellt.

Der Meßschlitten 5 ist durch zwei gegenläufige Antriebsrollen 10 höhenverstellbar, die an der Stange 6 angreifen. Durch die horizontale Oberfläche des Meßschlittens 5 wird eine Bezugsebene 11 definiert, an der der Tastbolzen 12 eines Meßtasters 13 anliegt, der in einem Rahmen 14 eingespannt ist, der auf der Lagerschale 3 befestigt ist. Zum Messen der Höhenverstellung der Bezugsebene 11 des Meßschlittens 5 ist ein Laserinterferometer 15, 16, 21, 22 vorgesehen. Der horizontal verlaufende Laserstrahl 17 des Lasers 15 fällt durch eine mit einer Glasplatte 18 verschlossene Öffnung 19 in der Lager-

- 4 -

schale 3 und durch einen vertikalen Schlitz 20 in der Wandung des Meßschlittens 5 auf einen Umlenkspiegel 21 im Inneren des hohlen Meßschlittens 5 und von diesem senkrecht nach oben auf einen Tripelspiegel 22, von dem er als reflektierter Laserstrahl parallel versetzt zum einfallenden Laserstrahl in den Interferometerwürfel 16 gelangt. Der Umlenkspiegel 21 ist an einem Arm 24 durch den Schlitz 20 an der Lagerschale 3 befestigt.

Zum Eichen des Meßtasters 13 wird die Höhenverstellung der Bezugsebene 11 des Meßschlittens 5 mittels des Laserinterferometers 15, 16, 21, 22 gemessen und mit dem Meßergebnis des Meßtasters verglichen.

Die Masse der Flüssigkeit 8 kann durchaus geringer sein als die Gesamtmasse m von Meßschlitten 5, Stange 6 und Auftriebskörper 7; dennoch findet ein Massenausgleich statt, wie im folgenden gezeigt wird.

Wenn der Meßschlitten 5 mittels der Antriebsrollen 10 um ein Wegelement $\Delta x$ abgesenkt wird, so wird die Arbeit $A_1 = m \cdot g \cdot \Delta x$ freigesetzt (g = Erdbeschleunigung). Durch die Kopplung mit der Stange 6 wird der Auftriebskörper 7 um das gleiche Wegelement $\Delta x$ nach unten verschoben und verdrängt dabei das Flüssigkeitsvolumen $F \cdot \Delta x$ (F = Grundfläche des Auftriebskörpers 7). Das Flüssigkeitsvolumen $F \cdot \Delta x$ befindet sich nach der Verschiebung um das Wegelement $\Delta x$ oberhalb des Auftriebskörpers 7, ist also um die Höhe h des Auftriebskörpers 7 nach

- 5 -

oben verschoben. Dazu wurde die Arbeit $A_2$ = $F \cdot \Delta x \cdot \varrho \cdot g \cdot h$ geleistet ($\varrho$ = Dichte der Flüssigkeit 8). $F \cdot h$ ist das Volumen des Auftriebskörpers 7 und $F \cdot h \cdot \varrho$ die Masse der vom Auftriebskörper 7 verdrängten Flüssigkeit 8. Da aber der Auftriebskörper 7 so dimensioniert ist, daß Gleichgewicht herrscht, gilt $m = F \cdot h \cdot \varrho$ und damit $A_2 = m \cdot g \cdot \Delta x$, d.h. $A_1 = A_2$. Die Arbeit $A_2$, um das Flüssigkeitsvolumen $F \cdot \Delta x$ um die Strecke h nach oben zu befördern, ist gleich der Arbeit $A_1$, die beim Absenken des Meßschlittens 5 um das Wegelement $\Delta x$ gewonnen wird. Da die Bewegungsrichtungen entgegengesetzt sind, findet ein Massenausgleich statt. Der Schwerpunkt des Gesamtsystems bleibt in konstanter Höhe.

Der Eichvorgang beim Meßtaster 13 kann statisch durch Anfahren bestimmter Positionen oder dynamisch erfolgen, wobei die Meßstrecke mit konstanter Geschwindigkeit durchfahren wird und an vorgewählten Meßpositionen Meßwerte abgerufen und verglichen werden.

Um zu vermeiden, daß Querkräfte oder Momente auf den Meßschlitten 5 einwirken, ist an der Stange 6 mindestens eine als Gelenk wirkende Schwachstelle 25 in Form einer Querschnittsverengung vorgesehen.

Die vorgeschlagene Einrichtung kann auch zum Einstellen von Bezugslagen (Positionen) verwendet werden, um beispielsweise auf einem Maßstabskörper eine Teilung aufzubringen.

0098370

- 6 -

Ansprüche
=========

1.) Einrichtung zum Messen oder Einstellen einer
Bezugslage mit einem höhenverstellbaren Schlitten, insbesondere zum Eichen von Meßtastern,
dadurch gekennzeichnet, daß der Schlitten (5)
in Meßrichtung starr mit einem Auftriebskörper (7) gekoppelt ist, der völlig in eine
Flüssigkeit (8) eintaucht.

2.) Einrichtung nach Anspruch 1, dadurch gekennzeichnet, daß der Schlitten (5) mit dem Auftriebskörper (7) in Meßrichtung starr und
senkrecht zur Meßrichtung beweglich gekoppelt
ist.

3.) Einrichtung nach Anspruch 1 oder 2, dadurch
gekennzeichnet, daß die Kopplung zwischen dem
Schlitten (5) und dem Auftriebskörper (7) durch
mindestens eine Stange (6) erfolgt.

4.) Einrichtung nach Anspruch 2 oder 3, dadurch gekennzeichnet, daß die Stange (6) mindestens
eine als Gelenk wirkende Schwachstelle (25) in
Form einer Querschnittsverengung aufweist.

FIG.1